Europäisches Patentamt

European Patent Office

Office européen des brevets

(11) Veröffentlichungsnummer: **0 220 413 B1**

# EUROPÄISCHE PATENTSCHRIFT

(45) Veröffentlichungstag der Patentschrift: **22.05.91**

(51) Int. Cl.⁵: **H04L 7/02**

(21) Anmeldenummer: **86111702.6**

(22) Anmeldetag: **23.08.86**

(54) **Anordnung zur individuellen Anpassung einer seriellen Schnittstelle eines datenverarbeitenden Systems an eine Datenübertragungsgeschwindigkeit eines Kommunikationspartners.**

(30) Priorität: **22.10.85 DE 3537477**

(43) Veröffentlichungstag der Anmeldung:
**06.05.87 Patentblatt 87/19**

(45) Bekanntmachung des Hinweises auf die
Patenterteilung:
**22.05.91 Patentblatt 91/21**

(84) Benannte Vertragsstaaten:
**DE FR GB IT NL SE**

(56) Entgegenhaltungen:
**EP-A- 0 091 200**
**US-A- 3 962 541**

**ELECTRONIC DESIGN, Band 31, Nr. 8, April 1983, Seiten 93-104, Waseca, NJ, US; R. ALLAN: "Data-comm, telecomm ICs-moving to single chips and more intelligence"**

**ELECTRONIC DESIGN, Band 31, Nr. 21, Oktober 1983, Seiten 123-128, Waseca, MN, Denville, NJ, US; T. CURRAN et al.: "68000 peripheral chips assume I/O tasks and more"**

**ELECTRONIC DESIGN, Band 8, April 1968, Seiten 76-80, Denville, US; W.L. GILL et al.:**

**"Use ICs in your phase-locked loop"**

**PATENT ABSTRACTS OF JAPAN, Band 7, Nr. 256 (P-236)[1401], 15. November 1983; & JP-A-58 140 840 (HITACHI SEISAKUSHO K.K.) 20-08-1983**

(73) Patentinhaber: **Dr.Ing.h.c. F. Porsche Aktiengesellschaft**
**Porschestrasse 42**
**W-7000 Stuttgart 40(DE)**

(72) Erfinder: **Richter, Axel, Dr. Dipl.-Phys.**
**Erlenweg 6**
**W-7251 Wimsheim(DE)**

## Beschreibung

Die Erfindung betrifft eine Anordnung nach dem Oberbegriff des Hauptanspruchs.

Einzelne datenverarbeitende Systeme eines Rechnerverbundsystems weisen häufig unterschiedliche Taktfrequenzen und davon abgeleitete Datenübertragungsgeschwindigkeiten auf; nicht zuletzt deshalb, weil die Bausteine des Rechnerverbundsystems zum Teil mit völlig verschiedenen Mikroprozessoren der unterschiedlichsten Hersteller arbeiten.

Eine Kommunikation dieser einzelnen datenverarbeitenden Systeme miteinander über serielle Schnittstellen erfordert jedoch eine allen Kommunikationspartnern angepaßte Datenübertragung mit gleicher Datenübertragungsgeschwindigkeit.

In der DE-PS 23 55 533 bzw. der DE-OS 31 24 163 wurden daher schon Empfänger für Datensignale mit einem Änderungsdetektor für die Datenübertragungsgeschwindigkeit vorgeschlagen.

Nachteilig an diesen Systemen ist, daß die verschiedenen Datenübertragungsgeschwindigkeiten der Kommunikationspartner bekannt sein müssen und für jede vorkommende Datenübertragungsgeschwindigkeit eine eigene Erkennungsschaltung notwendig ist.

Zur Vermeidung dieser Nachteile setzt die Schaltung zur Wiedergewinnung von Taktsignalen nach der DE-OS 26 28 581 eine Schaltungsanordnung ein, die sich individuell auf Datenübertragungsgeschwindigkeiten in einem Frequenzbereich von 1 : 8 einstellen kann.

Dieser Frequenzbereich ist jedoch relativ schmal und lediglich zur Anpassung an Schwankungen um eine Festfrequenz geeignet. Zudem weist die Schaltungsanordnung einen enormen Aufwand an Baugruppen und -elementen auf und benötigt viele aufwendige, analoge Bauelemente wie Mischer, Filter usw., so daß bei der Herstellung/Wartung umfangreiche Abgleichmaßnahmen notwendig sind. Eine gute Langzeitstabilität ist daher kaum zu erwarten.

Ausgehend von diesem Stand der Technik ist es Aufgabe der Erfindung, eine Anordnung zur individuellen Anpassung einer seriellen Schnittstelle eines datenverarbeitenden Systems an eine Datenübertragungsgeschwindigkeit eines Kommunikationspartners zu schaffen, das sich durch einen einfachen Aufbau aus weitgehend digitalen Bausteinen auszeichnet und eine einfache, schnelle, sichere und in weitem Frequenzbereich genaue Einstellung des datenverarbeitenden Systems an die Datenübertragungsgeschwindigkeit zuläßt.

Die Vorteile der Erfindung sind in erster Linie darin zu sehen, daß eine Anordnung zur individuellen Anpassung einer seriellen Schnittstelle eines datenverarbeitenden Systems an eine Datenübertragungsgeschwindigkeit eines Kommunikationspartners geschaffen ist, die sich durch einen bestechend einfachen Aufbau aus weitgehend digitalen Bausteinen auszeichnet. Sie gewährleistet ferner in einem weiten Frequenzbereich von 1 : 200 oder mehr eine exakte schnelle und sichere Einstellung der Schnittstelle an die Datenübertragungsgeschwindigkeit des Kommunikationspartners ohne umfangreiche Steuerprozedur.

Die Erfindung wird anhand von in den Zeichnungen dargestellten Beispielen nachstehend näher erläutert.

Es zeigt

Fig. 1    ein Rechnerverbundsystem, aufgebaut aus Mikroprozessorsystemen,

Fig. 2    ein Blockschaltbild der Anordung nach der Erfindung,

Fig. 3    ein Blockschaltbild nach Fig. 2, jedoch mit einer Initialisierungsschaltung für einen einstellbaren Teiler,

Fig. 4    ein Blockschaltbild nach Fig. 2, jedoch mit einer Signalaufbereitungsschaltung und einem, einen Speicher umfassenden Zähler.

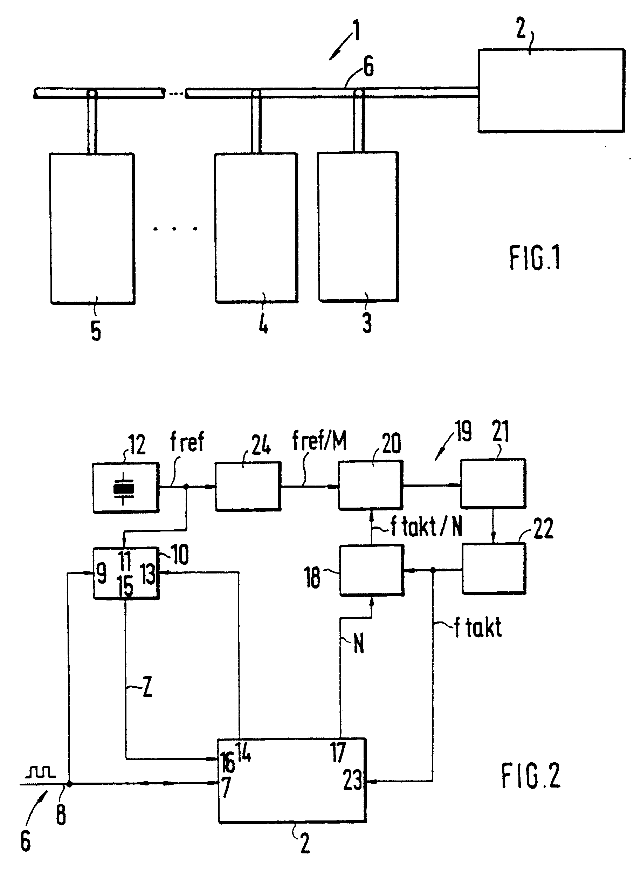

In Fig. 1 ist mit 1 ein aus Mikroprozessorsystemen aufgebautes Rechnerverbundsystem gezeigt, bei dem ein erstes Mikroprozessorsystem 2 mit weiteren Mikroprozessorsystemen 3 bis 5 über ein Bussystem 6 verbunden ist. Die Mikroprozessorsysteme 2 bis 5 können über das Bussystem 6 miteinander Daten austauschen.

Im gegebenen Fall soll es sich um ein asynchrones serielles Bussystem 6 handeln, wobei das erste Mikroprozessorsystem 2 als übergeordnetes System aufzufassen ist, das über den seriellen Bus Daten von den weiteren Mikroprozessoren 3 bis 5 abfragt. Selbstverständlich ist die Anordnung aber auch bei synchroner Datenübertragung anwendbar.

Derartige Mikroprozessorsysteme sind häufig mit völlig verschiedenen Mikroprozessoren unterschiedlicher Hersteller bestückt, inbesondere wenn die Mikroprozessorsysteme von verschiedenen Herstellerfirmen geliefert werden. Sie arbeiten daher oft mit voneinander abweichenden Taktfrequenzen, ebenso weisen ihre Schnittstellen selten eine einheitliche Übertragungsgeschwindigkeit auf.

Das übergeordnete, erste Mikroprozessorsystem 2 benötigt also eine Anordnung, mit dem es sich auf die individuellen Übertragungsgeschwindigkeiten der jeweiligen Kommunikationspartner einstellen kann.

Eine derartige Anordnung ist in Fig. 2 gezeigt. Das erste Mikroprozessorsystem 2 umfaßt eine - nicht gezeigte - serielle Schnittstelle, über die es - mittels des Eingangs/Ausgangs 7 - mit einer Signalleitung 8 des seriellen Bussystems 6 verbunden ist.

Das erste Mikroprozessorsystem 2 ist beispielsweise in einer Konfiguration aus Mikroprozessor, flüchtigen (RAM) und nichtflüchtigen (ROM) Speicherbausteinen, der seriellen Schnittstelle und parallelen Ein-/Ausgabebausteinen sowie sonstigen, für ihren Betrieb notwendigen Bauteilen aufgebaut oder in Form eines Ein-Chip-Systems realisiert; da diese allgemein bekannt sind, wird darauf nicht näher eingegangen. Ebenso wurde aus Übersichtlichkeitsgründen auf die Darstellung einer Stromzufuhr verzichtet, wie auch auf die Darstellung einzelner Leitungen mehradriger Verbindungen.

Die auf der Signalleitung 8 ankommenden Signale werden zusätzlich auf einen Eingang 9 eines Zählers 10 (z. B. Binärzähler) geschaltet, dessen Zähleingang 11 mit Impulsen eines Referenzfrequenzsignals fref beaufschlagt ist, das von einem Referenzfrequenzsignalgenerator 12 erzeugt wird. Der Zähler kann zudem über einen Steuereingang 13 vom Mikroprozessorsystem 2 (Ausgang 14) gesteuert und/oder zurückgesetzt werden. Das Zählergebnis Z wird über einen Zählerausgang 15 einem Eingang 16 des Mikroprozessorsystems 2 zur weiteren Verarbeitung zur Verfügung gestellt.

Mittels des an einem Ausgang 17 des Mikroprozessorsystems 2 ausgebbaren Signals N kann ein erstes Teilverhältnis 1/N eines ersten Frequenzteilers 18 innerhalb einer Phasenverriegelungsschleife 19 eingestellt werden; diese besteht außerdem aus einem Phasenkomparator 20, einem Tiefpaßfilter 21 und einem elektronisch (spannungs-) gesteuerten Oszillator (VCO) 22, die mit dem ersten Frequenzteiler 18 ringförmig zusammengeschaltet sind.

Der spannungsgesteuerte Oszillator 22 erzeugt ein Taktsignal ftakt, mit dem das Mikroprozessorsystem 2 über einen Taktfrequenzeingang 23 beaufschlagt ist. Der erste Frequenzteiler 18 teilt das Taktsignal ftakt im Verhältnis 1/N und führt das geteilte Signal dem Phasenkomparator 20 zu, der es mit dem durch einen zweiten, fest eingestellten Frequenzteiler 24 in einem Verhältnis 1/M geteilten Referenzfrequenzsignal fref (fref/M) vergleicht. Die Ausgangsgröße des Phasenkomparators 20 dient, über das Tiefpaßfilter 21 von höherfrequenten Anteilen befreit, als Ansteuersignal für den elektronisch gesteuerten Oszillator 22.
Die Funktion der Anordnung erklärt sich wie folgt:
Mit einem auf der Signalleitung 8 ankommendem Rechteckimpuls wird der Zähler 10 gestartet und am Ende des Rechteckimpulses wieder gestoppt; dabei ist es belanglos, ob der Startvorgang mittels Pegeldetektion ( = Überschreiten eines bestimmten Signalpegels) oder Flankentriggerung ( = Detektion einer ansteigenden bzw. abfallenden Signalflanke) erfolgt. Mit dem Starten des Zählers 10 zählt dieser Impulse des Referenzsignals fref des mit einer hochgenauen Quarzzeitbasis arbeitenden Referenzfrequenzsignalgenerators 12. Nach Stoppen des Zählers liest der erste Mikroprozessor 2 das Zählergebnis aus.

Damit die Datenübertragungsgeschwindigkeit exakt bestimmt werden kann, ist es günstig, wenn der Kommunikationspartner der eigentlichen Datenübertragung ein Datensignal mit speziellem Bitmuster voranstellt, das sich dafür besonders eignet; es hat sich als günstig erwiesen, wenn sich das Bitmuster als Rechtecksignal darstellt. Selbstverständlich ist es auch möglich, die Datenübertragungsgeschwindigkeit aus einem normalen Datenübertragungssignal zu bestimmen, allerdings ist hierzu die Ausmessung einer ganzen Reihe von Impulsen nötig und eine besondere Programmroutine des Mikroprozessorsystems 2, das die "richtige" Impulslänge (d. h. die Zeitdauer für die Übertragung eines einzelnen Bits) bestimmt.

Da die Quarzzeitbasis bzw. Referenzfrequenz bekannt ist, kann durch das Mikroprozessorsystem 2 aus dem Zählergebnis die Datenübertragungsgeschwindigkeit v ermittelt und daraus das erste Teilverhältnis 1/N bestimmt werden. Alternativ kann das Mikroprozessorsystem 2 direkt aus einer in einem Speicherbereich abgelegten Tabelle einen Wert für das Signal N des ersten Teilverhältnisses 1/N auslesen bzw. an den ersten Frequenzteiler 18 ausgeben, wobei dieser Wert einem vorher ermittelten Zählergebnis Z entspricht; das Zählergebnis Z kann somit direkt oder indirekt als Adresse für diesen Speicherbereich dienen.

Der spannungsgesteuerte Oszillator 22 wird vom Phasenkomparator 20 des Phasenverriegelungskreises 19 daraufhin so gesteuert, daß sich an seinen Eingängen ein Gleichgewicht einstellt:

$$ftakt/N = fref/M,$$

so daß gilt:

$$ftakt = (N/M) * fref.$$

Das Teilverhältnis 1/M am zweiten Frequenzteiler 24 ist fest eingestellt. Es bestimmt die Frequenzinkremente, um die sich das Taktfrequenzsignal ftakt verstellen läßt; es wird so festgelegt, daß sich durch den programmierbaren, ganzzahligen Wert von N eine geeignete Taktfrequenz ftakt einregelt, aus der sich gewünschte Übertragungsgeschwindigkeiten v' in einer geforderten Genauigkeit durch ganzzahlige Teilung ableiten lassen, so daß das Mikroprozessorsystem also mit dem Kommunikationspartner synchronisierbar ist.

Damit das erste Mikroprozessorsystem 2, sofern es einen gemeinsamen Systemtakt für den Mikroprozessor und die serielle Schnittstelle aufweist, bei einem Systemstart (Inbetriebnahme oder Wiederinbetriebnahme) überhaupt mit einem für seinen Betrieb notwendigen Taktfrequenzsignal ftakt beaufschlagt werden kann, ist es erforderlich, in einer Initialisierungsphase zunächst ein erstes Teilverhältnis 1/N einzustellen, da ohne dieses ein Betrieb der Phasenverriegelungsschleife 19 nicht möglich ist. Es sei denn, daß der spannungsgesteuerte Oszillator 22 selbstanlaufend ausgelegt ist und ein Taktfrequenzsignal ftakt aus einem wenigstens nach unten begrenzten Frequenzband auch im ungesteuerten Zustand zu erzeugen vermag; das Taktfrequenzsignal ftakt nimmt dann eine Frequenz an, die an einer unteren Frequenzgrenze liegt.

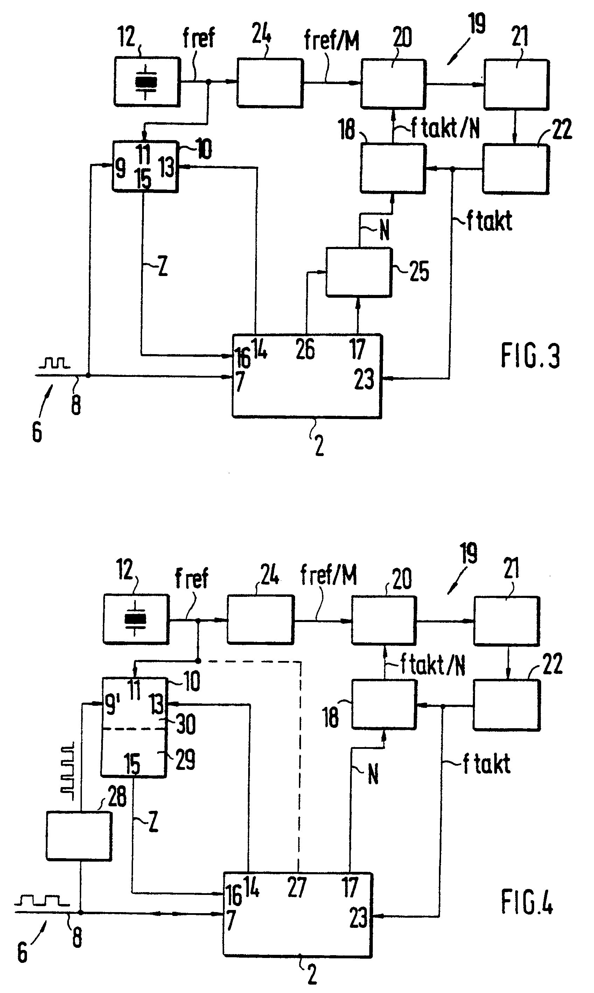

Wie in Fig. 3 dargestellt, ist eine zusätzliche Speichereinheit 25 zwischen den Ausgang 17 des Mikroprozessorsystems 2 und den Eingang zum Einstellen des Teilverhältnisses 1/N am ersten Frequenzteiler 18 geschaltet; sie kann selbstverständlich auch in diesem oder dem Mikroprozessorsystem 2 integriert sein. Die zusätzliche Speichereinheit 25 wird über einen Steuerausgang 26 des Mikroprozessorsystems 2 mittels einer allgemein bekannten Initialisierungsschaltung gesteuert und gibt, solange kein neues Zählergebnis Z vom Zähler 10 ansteht, ein bestimmtes Teilverhältnis 1/Nstart aus; bei diesem kann es sich selbstverständlich auch um das vor dem Abschalten des Mikroprozessorsystems 2 zuletzt eingestellte handeln.

Bei einem Mikroprozessorsystem 2, bei dem mit dem Taktfrequenzsignal ftakt lediglich die Datenübertragung der seriellen Schnittstelle versorgt wird und der Mikroprozessor des Mikroprozessorsystems 2 mit einem eigenen Systemtaktgenerator ausgerüstet ist, kann eine zusätzliche Speichereinheit 25 zur Zwischenspeicherung des ersten Teilverhältnisses 1/N bzw. eine entsprechende Initialisierungsschaltung entfallen, da der Mikroprozessor selbsttätig anläuft und das erste Teilverhältnis in seiner Initialisierungsphase oder nach der ersten Messung der Datenübertragungsgeschwindigkeit v ausgeben kann. Der Systemtaktgenerator kann hierbei mit dem Referenzfrequenzgenerator 12 identisch sein (siehe Fig. 4; gestrichelte Verbindung vom Referenzfrequenzgenerator 12 zum Eingang 27 des Mikroprozessorsystems 2).

Entsprechend Fig. 4 kann in der Verbindung zwischen der Datenleitung 8 und dem Zähler 10 zusätzlich eine Signalaufbereitungsschaltung 28 vorgesehen sein, die die Impulsflanken des Rechtecksignals in Steuerimpulse definierter Form, wie sie z. B. durch eine Spezifikation des Zählers (Eingang 9) vorgegeben sein kann, wandelt.

Der Zähler 10 kann auch einen Speicher zur Zwischenspeicherung eines Zählergebnisses umfassen. Der Zähler ist hierbei in ein Speicherteil 29 und ein Zähler- und Steuerteil 30 aufgegliedert. Mit einem Steuerimpuls am Eingang 9 kann hierbei ein augenblickliches Zählergebnis in einen Speicher des Speicherteils 29 übernommen werden, wobei der Zähler ungestört weiterläuft und sich eine höhere Meßgenauigkeit ergibt.

Es ist ferner sinnvoll, die Datenübertragungsgeschwindigkeit v dadurch zu erfassen, daß die Impulse des Referenzsignals fref während wenigstens zwei aufeinanderfolgenden Bits unterschiedlichen logischen Zustands des vom Kommunikationspartner gesendeten speziellen Datensignals (entsprechend einer oder mehrerer vollständiger Rechteckschwingungen) gezählt werden, da es sich gezeigt hat, daß die Bits unterschiedlicher Polarität oft verschiedene Impulslängen aufweisen. Ebenso kann ein Meßergebnis für die Datenübertragungsgeschwindigkeit v durch Mittelwertbildung über mehrere Messungen verbessert werden; das Mikroprozessorsystem 2 verarbeitet hierzu wenigstens zwei aufeinander folgende Meßergebnisse.

Es sei am Rande bemerkt, daß bei gleichberechtigten Kommunikationspartnern, d. h., Mikroprozessorsystemen, von denen jedes Daten von einem beliebigen anderen Partner abfragen kann, mit einer derartigen Anordnung ausrüstbar ist, so daß eine problemlose Kommunikation ermöglicht wird; hierbei kann jedes sendende Mikroprozessorsystem eine beliebige, ihm eigene Übertragungsgeschwindigkeit verwenden.

## Ansprüche

1. Anordnung zur individuellen Anpassung einer seriellen Schnittstelle eines datenverarbeitenden Systems, insbesondere eines ersten Mikroprozessorsystems, an eine Datenübertragungsgeschwindigkeit (v) eines Kommunikationspartners, beispielsweise eines weiteren Mikroprozessorsystems innerhalb eines Rechnerverbundsystems, mit einer Erkennungsschaltung für die Datenübertragungsgechwindigkeit (v), einem ein Taktfrequenzsignal (ftakt) erzeugenden, elektronisch gesteuerten Oszillator und einstellbaren ersten und zweiten Frequenzteilern, **dadurch gekennzeichnet**, daß die vom ersten Mikroprozessorsystem (2) gesteuerte Erkennungsschaltung einen über einen Eingang (9, 9') von Impulsen oder Impulsflanken eines vom Kommunikationspartner gesendeten Signals gesteuerten, Impulse eines von einem Referenzfrequenzgenerator (12) erzeugten Referenzfrequenzsignals fref) zählenden Zähler (10) umfaßt, aus dem das erste Mikroprozessorsystem (2) ein Zählergebnis (Z) ausliest und in Abhängigkeit davon die Taktfrequenz des vom elektronisch (spannungs-) gesteuerten Oszillator (22) erzeugten Taktfrequenzsignals (ftakt) durch Einstellen eines ersten Teilverhältnisses (1/N) des in einer Phasenverriegelungsschleife (19) mit einem Phasenkomparator (20), einem Tiefpaßfilter (21) und dem spannungsgesteuerten Oszillator (22) ringförmig zusammengeschalteten ersten Frequenzteilers (18) so einstellt, daß aus ihr durch ganzzahlige Teilung eine Datenübertragungsgeschwindigkeit (v') ableitbar ist, die im Rahmen einer geforderten Genauigkeit der Datenübertragungsgeschwindigkeit (v) des Kommunikationspartners entspricht, wobei der Phasenkomparator (20) das durch den ersten Frequenzteiler (18) heruntergeteilte Taktfrequenzsignal (ftakt) mit dem durch den zweiten Frequenzteiler (24) in einem zweiten Teilverhältnis (1/M) geteilten Referenzfrequenzsignal (fref) vergleicht.

2. Anordnung nach Anspruch 1, dadurch gekennzeichnet, daß das zweite Teilverhältnis (1/M) derart eingestellt ist, daß sich aus den durch Einstellen des ersten Teilverhältnisses (1/N) ergebenden Frequenzinkrementen des Taktfrequenzsignals die Datenübertragungsgeschwindigkeit (v') in der geforderten Genauigkeit ableiten läßt.

3. Anordnung nach Anspruch 2, dadurch gekennzeichnet, daß die Ermittlung der Datenübertragungsgeschwindigkeit (v) durch Zählung der zwischen zwei Impulsflanken des vom Kommunikationspartner gesendeten Signals erzeugten Impulse des Referenzfrequenzsignals (fref) erfolgt.

4. Anordnung nach Anspruch 2 oder 3, dadurch gekennzeichnet, daß die Ermittlung der Datenübertragungsgeschwindigkeit (v) mittels eines, vom Kommunikationspartner gesendeten, einer regulären Datenübertragung vorangestellten Datensignals mit einem speziellen Bitmuster erfolgt.

5. Anordnung nach Anspruch 4, dadurch gekennzeichnet, daß sich das spezielle Bitmuster als Rechtecksignal darstellt.

6. Anordnung nach Anspruch 5, dadurch gekennzeichnet, daß die Ermittlung der Datenübertragungsgeschwindigkeit durch Zählung der Impulse des Referenzfrequenzsignals (fref) während der Übertragung von wenigstens zwei aufeinanderfolgenden Bits des Rechtecksignals mit unterschiedlichem logischen Zustand (entsprechend einer oder mehrerer vollständiger Rechteckschwingungen) erfolgt.

7. Anordnung nach Anspruch 6, dadurch gekennzeichnet, daß die Bestimmung der Datenübertragungsgeschwindigkeit (v) im Mikroprozessorsystem (2) durch Mittelwertbildung über mehrere Meßergebnisse erfolgt.

8. Anordnung nach Anspruch 7, dadurch gekennzeichnet, daß der Zähler (10) ein Speicherteil (29) umfaßt, das ein augenblickliches Zählergebnis zwischengespeichert, wobei der Zeitpunkt der Zwischenspeicherung in Abhängigkeit von den Impulsen oder Impulsflanken des vom Kommunikationspartner gesendeten Signals erfolgt.

9. Anordnung nach Anspruch 8, dadurch gekennzeichnet, daß die Aufbereitung der dem Zähler (10) zugeführten, vom Kommunikationspartner gesendeten Signals und damit die Wandelung der Impulsflanken des Signals in Steuerimpulse definierter Form in einer Signalaufbereitungsschaltung (28) erfolgt.

10. Anordnung nach Anspruch 2 oder 9, dadurch gekennzeichnet, daß das Taktfrequenzsignal (ftakt) als Systemtakt für das gesamte Mikroprozessorsystem (2) dient.

11. Anordnung nach Anspruch 2 oder 9, dadurch gekennzeichnet, daß das Taktfrequenzsignal (ftakt) lediglich als Systemtakt für die Datenübertragung der seriellen Schnittstelle des Mikroprozessorsystems (2) dient.

12. Anordnung nach Anspruch 11, dadurch gekennzeichnet, daß das Mikroprozessorsystem (2) einen eigenen Systemtaktgenerator aufweist.

13. Anordnung nach Anspruch 11, dadurch gekennzeichnet, daß der Referenzsignalgenerator (12) als Systemtaktgenerator für das Mikroprozessorsystem (2) dient.

14. Anordnung nach Anspruch 10 oder 13, dadurch gekennzeichnet, daß das erste Teilverhältnis (1/N) bei Abschalten des ersten Mikroprozessorsystems (2) im ersten Frequenzteiler (18) oder im ersten Mikroprozessorsystem (2) oder einer zusätzlichen Speichereinheit (25) permanent gespeichert bleibt.

15. Anordnung nach Anspruch 10, dadurch gekennzeichnet, daß die Anordnung eine Initialisierungsschaltung umfaßt, die bei einem Startvorgang nach erfolgtem Abschalten des ersten Mikroprozessorsystems (2) ein bestimmtes Teilverhältnis (1/Nstart) am ersten Frequenzteiler (18) einstellt.

16. Anordnung nach Anspruch 15, dadurch gekennzeichnet, daß die Initialisierungsschaltung im ersten Mikroprozessorsystem (2) integriert ist.

17. Anordnung nach den Ansprüchen 10, 12, 13, 14 oder 16, dadurch gekennzeichnet, daß der spannungsgesteuerte Oszillator (22) bei Anlegen einer Betriebsspannung selbstanlaufend ist und ein Taktfrequenzsignal (ftakt) in einem wenigstens nach unten begrenzten Frequenzband erzeugt, wobei das Taktfrequenzsignal (ftakt) in einem ungesteuerten Zustand des spannungsgesteuerten Oszillators (22) eine untere Grenzfrequenz annimmt.

## Claims

1. Arrangement for the individual adaptation of a serial interface of a data-processing system, in particular of a first microprocessor system, to a data transmission speed (v) of a communication partner, for example of a further microprocessor system within a computer network, with a recognition circuit for the data transmission speed (v), an electronically controlled oscillator which produces a clock frequency signal (ftakt) and adjustable first and second frequency dividers, characterised in that the recognition circuit controlled by the first microprocessor system (2) comprises a counter (10) which is controlled via an input (9, 9') by pulses or pulse edges of a signal transmitted by the communication partner and counts pulses of a reference frequency signal (fref) produced by a reference frequency generator (12), from which counter (10) the first microprocessor system (2) reads out a count (Z) and, as a function thereof, adjusts the clock frequency of the clock frequency signal (ftakt) produced by the electronically (voltage-) controlled oscillator (22) by adjusting a first division ratio (1/N) of the first frequency divider (18) connected together in the form of a ring in a phase locked loop (19) with a phase comparator (20), a low-pass filter (21) and the voltage-controlled oscillator (22), such than a data transmission speed (v') corresponding to the data transmission speed (v) of the communication partner in the scope of the required accuracy can be derived from it by integer division, the phase comparator (20) comparing the clock frequency signal (ftakt) divided down by the first frequency divider (18) with the reference frequency signal (fref) divided by the second frequency divider (24) in a second division ratio (1/M).

2. Arrangement according to claim 1, characterised in that the second division ratio (1/M) is adjusted such that the data transmission speed (v') can be derived with the required accuracy from the frequency increments of the clock frequency signal produced by adjusting the first division ratio (1/N).

3. Arrangement according to claim 2, characterised in that the data transmission speed (v) is determined by counting the pulses of the reference frequency signal (fref) produced between two pulse edges of the signal transmitted by the communication partner.

4. Arrangement according to claim 2 or 3, characterised in that the data transmission speed (v) is determined by means of a data signal with a specific bit pattern transmitted by the communication partner and put ahead of a regular data transmission.

5. Arrangement according to claim 4, characterised in that the specific bit pattern is a rectangular signal.

6. Arrangement according to claim 5, characterised in that the data transmission speed is determined by counting the pulses of the reference frequency signal (fref) during the transmission of at least two successive bits of the rectangular signal having a different logic state (corresponding to one or more complete square waves).

7. Arrangement according to claim 6, characterised in that the data transmission speed (v) is calculated in the microprocessor system (2) by averaging over several measurement results.

8. Arrangement according to claim 7, characterised in that the counter (12) comprises a memory part (29) which temporarily stores an instantaneous count, the moment of intermediate storage occurring as a function of the pulses or pulse edges of the signal transmitted by the communication partner.

9. Arrangement according to claim 8, characterised in that the signal supplied to the counter (10) and transmitted by the communication partner is processed and the pulse edges of the signal are therefore converted into control pulses of defined shape in a signal processing circuit (28).

10. Arrangement according to claim 2 or 9, characterised in that the clock frequency signal (ftakt) serves as a system clock for the entire microprocessor system (2).

11. Arrangement according to claim 2 or 9, characterised in that the clock frequency signal (ftakt) serves merely as a system clock for the data transmission of the serial interface of the microprocessor system (2).

12. Arrangement according to claim 11, characterised in that the microprocessor system (2) has its own system clock generator.

13. Arrangement according to claim 11, characterised in that the reference signal generator (12) serves as a system clock generator for the microprocessor system (2).

14. Arrangement according to claim 10 or 13, characterised in that the first division ratio (1/N) remains stored permanently in the first frequency divider (18) or in the first microprocessor system (2) or an additional memory unit (25) when the first microprocessor system (2) is switched off.

15. Arrangement according to claim 10, characterised in that the arrangement comprises an initialization circuit which adjusts a certain division ratio (1/Nstart) at the first

16. Arrangement according to claim 15, characterised in that the initialization circuit is integrated in the first microprocessor system (2).

17. Arrangement according to claims 10, 12, 13, 14 or 16, characterised in that the voltage-controlled oscillator (22) is self-starting when an operating voltage is applied and produces a clock frequency signal (ftakt) in a frequency band which is limited at least downwardly, the clock frequency signal (ftakt) assuming a lower limit frequency in an uncontrolled state of the voltage-controlled oscillator (22).

## Revendications

1. Dispositif pour adapter individuellement une interface série d'un système informatique, notamment d'un premier système à microprocesseurs, à une vitesse de transmission de données (v) d'un partenaire de communication, par exemple à un autre système à microprocesseurs à l'intérieur d'un réseau informatique, comportant un circuit de détection pour la vitesse de transmission de données (v), un oscillateur commandé électroniquement, produisant un signal de fréquence de rythme (ftakt) et des premiers et deuxièmes diviseurs de fréquence réglables, caractérisé en ce que le circuit de détection, commandé par le premier système à microprocesseurs (2), comprend un compteur (10) commandé, par l'intermédiaire d'une entrée (9, 9'), par des impulsions ou des flancs d'impulsions d'un signal émis par le partenaire de communication, comptant les impulsions d'un signal de fréquence de référence (fref), émis par un générateur de fréquence de référence (12), à partir duquel le premier système à microprocesseurs (2) lit un résultat de comptage (Z) et règle, en fonction de ce résultat, la fréquence de rythme du signal de fréquence de rythme (ftakt), engendré par l'oscillateur (22) commandé (en tension) électroniquement, par établissement d'un premier rapport de division (1/N) du premier diviseur de fréquence (18), monté en anneau dans une boucle de verrouillage de phase (19) avec un comparateur de phase (20), un filtre passe-bas (21) et l'oscillateur (22) commandé en tension, de manière qu'à partir de celle-ci on puisse dériver, par division entière, une vitesse de transmission de données (v') qui, dans les limites de précision exigées, corresponde à la vitesse de transmission de données (v) du partenaire de communication, le comparateur de phase (20) comparant le signal de fréquence de rythme (ftakt), divisé par le premier diviseur de fréquence (18), au signal de fréquence de référence (fref), divisé par le deuxième diviseur de fréquence (24), dans un deuxième rapport de division (1/M).

2. Dispositif selon la revendication 1, caractérisé en ce que le deuxième rapport de division (1/M) est établi de telle sorte que la vitesse de transmission de données (v') puisse être dérivée avec la précision exigée, des incréments de fréquence du signal de fréquence de rythme, résultant de l'établissement du premier rapport de division (1/N).

3. Dispositif selon la revendication 2, caractérisé en ce que la détermination de la vitesse de transmission de données (v) s'effectue par comptage des impulsions du signal de fréquence de référence (fref), engendrées entre deux flancs d'impulsions du signal émis par le partenaire de communication.

4. Dispositif selon la revendication 2 ou 3, caractérisé en ce que la détermination de la vitesse de transmission de données (v) s'effectue au moyen d'un signal de données émis par le partenaire de communication, précédant une transmission de données régulière, avec un modèle binaire spécial.

5. Dispositif selon la revendication 4, caractérisé en ce que le modèle binaire spécial se présente comme un signal rectangulaire.

6. Dispositif selon la revendication 5, caractérisé en ce que la détermination de la vitesse de transmission de données par comptage des impulsions du signal de fréquence de référence (fref) s'effectue pendant la transmission d'au moins deux bits successifs du signal rectangulaire avec état logique différent (suivant une ou plusieurs oscillations rectangulaires complètes).

7. Dispositif selon la revendication 6, caractérisé en ce que la détermination de la vitesse de transmission de données (v) s'effectue dans le système à microprocesseurs (2), par formation de la moyenne de plusieurs résultats de mesure.

8. Dispositif selon la revendication 7, caractérisé en ce que le compteur (10) comporte un élément de mémoire (29) qui mémorise de façon intermédiaire un résultat de comptage instantané, l'instant de la mémorisation intermédiaire étant fonction des impulsions ou flancs d'impulsions du signal émis par le partenaire de communication.

9. Dispositif selon la revendication 8, caractérisé en ce que la préparation du signal émis par le partenaire de communication, envoyé au compteur (10) et donc la conversion des flancs d'impulsions du signal, en impulsions de commande de forme définie, s'effectue dans un circuit de préparation de signaux (28).

10. Dispositif selon la revendication 2 ou 9, caractérisé en ce que le signal de fréquence de rythme (ftakt) sert de rythme de système pour l'ensemble du système à microprocesseurs (2).

11. Dispositif selon la revendication 2 ou 9, caractérisé en ce que le signal de fréquence de rythme (ftakt) sert uniquement de rythme de système pour la transmission des données de l'interface série du système à microprocesseurs (2).

12. Dispositif selon la revendication 11, caractérisé en ce que le système à microprocesseurs (2) comporte son propre générateur de rythme de système.

13. Dispositif selon la revendication 11, caractérisé en ce que le générateur de signal de référence (12) sert de générateur de rythme de système pour le système à microprocesseurs (2).

14. Dispositif selon la revendication 10 ou 13, caractérisé en ce que le premier rapport de division (1/N) reste mémorisé en permanence, lors de la coupure du premier système à microprocesseurs (2), dans le premier diviseur de fréquence (18) ou dans le premier système à microprocesseurs (2) ou dans une unité de mémoire (25) supplémentaire.

15. Dispositif selon la revendication 10, caractérisé en ce que ce dispositif comporte un circuit d'initialisation qui, lors d'un lancement, après coupure du premier système à microprocesseurs (2), établit un rapport de division (1/Nstart) déterminé dans le premier diviseur de fréquence (18).

16. Dispositif selon la revendication 15, caractérisé en ce que le circuit d'initialisation est intégré dans le premier système à microprocesseurs (2).

17. Dispositif selon les revendications 10, 12, 13, 14 ou 16, caractérisé en ce que l'oscillateur (22) commandé en tension se met automatiquement en marche, sous l'application d'une tension de service et engendre un signal de fréquence de rythme (ftakt) dans une bande de fréquences au moins limitée vers le bas, le signal de fréquence de rythme (ftakt) prenant une fréquence limite inférieure, lorsque l'oscillateur (22) commandé en tension est à l'état non commandé.

FIG.1

FIG.2

FIG.3

FIG.4